# EUROPÄISCHE PATENTSCHRIFT

(11) **EP 2 461 887 B1**
(45) Veröffentlichungstag und Bekanntmachung des Hinweises auf die Patenterteilung: **07.09.2016**
(21) Anmeldenummer: 10739562.6
(22) Anmeldetag: 27.07.2010
(51) Int. Cl.: B01D 45/16, B01D 50/00, B01D 46/52, B01D 46/00

(54) **Filtereinrichtung und Verwendung eines Wickelfilterelements**
Filter device and use of a wound filter element
Dispositif de filtration et utilisation d'un élément filtre enroulé

(30) Priorität: 07.08.2009 DE 102009036475
(43) Veröffentlichungstag der Anmeldung: 13.06.2012
(73) Patentinhaber: Mahle International GmbH, 70376 Stuttgart (DE)
(72) Erfinder: WAIBEL, Hans, 71686 Remseck Aldingen (DE); TRAUB, Matthias, 71034 Böblingen (DE)
(74) Vertreter: BRP Renaud & Partner mbB Rechtsanwälte Patentanwälte Steuerberater
(86) Internationale Anmeldenummer: PCT/EP2010/060857
(87) Internationale Veröffentlichungsnummer: WO 2011/015489

(56) Entgegenhaltungen:
- EP-A1- 1 036 585
- EP-A2- 1 844 840
- US-A1- 2005 022 669
- US-A1- 2006 101 795
- US-A1- 2007 199 285

## Beschreibung

Die vorliegende Erfindung betrifft eine Filtereinrichtung, insbesondere eine Luftfiltereinrichtung, bevorzugt für eine Frischluftanlage einer Brennkraftmaschine, vorzugsweise in einem Kraftfahrzeug, mit den Merkmalen des Oberbegriffs des Anspruchs 1. Ferner betrifft die vorliegende Erfindung eine Verwendung eines Wickelfilterelements in einer derartigen Filtereinrichtung.

Aus der US 6,974,490 B2 ist eine Luftfiltereinrichtung bekannt, die in einem Filtergehäuse ein Wickelfilterelement aufweist, das einen Wickelkern und ein in Umfangsrichtung um den Wickelkern gewickeltes Filtermedium aufweist. Beim Filtermedium handelt es sich um ein Wellfiltermedium, also um ein gewelltes Filter-medium, so dass durch den Wickelvorgang eine Vielzahl parallel zur Wickelachse verlaufender Kanäle entsteht. Diese werden wechselseitig an ihren Enden verschlossen, wodurch ausgangsseitig verschlossene Einlasskanäle und eingangsseitig verschlossene Auslasskanäle bereitgestellt werden, die durch das Filtermaterial voneinander getrennt sind. Dies entspricht grundsätzlich dem Aufbau eines keramischen Partikelfilters zur Abgasreinigung.

Zur axialen Stabilisierung des Wickelfilterelements ist bei der bekannten Luftfiltereinrichtung an der axialen Abströmseite des Wickelfliterelements eine Versteifungsstruktur unmittelbar am Wickelfilterelement angebracht, die mehrere sternförmig oder fachwerkartig angeordnete Stege aufweist. Der Aufwand zur Realisierung einer derartigen Versteifungsstruktur ist vergleichsweise groß. Außerdem blockieren die Stege eine vergleichsweise große Anzahl der Kanäle, wodurch die nutzbare Querschnittsfläche des Wickelfilterelements reduziert und dessen Durchströmungswiderstand erhöht wird.

Eine gattungsgemäße Filtereinrichtung Ist aus der US 2006/0101795 A1 bekannt. Sie umfasst ein Wickelfilterelement, das einen Wickelkern und ein in Umfangsrichtung um den Wickelkern gewickeltes Filtermedium aufweist, ein Filtergehäuse zur Aufnahme des Wickelfilterelements und einen Zyklonvorabscheider, der zumindest ein Zyklonelement mit einem Zyklongehäuse und einem darin eintauchenden Tauchrohr aufweist, wobei in das Filtergehäuse eine das jeweilige Tauchrohr aufweisende Tauchrohrplatte eingebaut ist.

Aus der US 2005/0022669 A1 ist eine andere Filtereinrichtung bekannt, die ein stromauf liegendes Wickelfilterelement und ein stromab liegendes Plattenfilterelement aufweist. Um eine vereinfachte Montage bzw. einen vereinfachten Austausch gebrauchter Filterelemente realisieren zu können, sind das Wickelfilterelement und das Plattenfilterelement zu einer Filtereinheit zusammengefasst. Hierzu Ist das Plattenfilterelement an der Abströmseite des Wickelfilterelements befestigt. Zu diesem Zweck besitzt die Filtereinheit einen Träger, der auf die Abströmseite des Wickelfilterelements aufgesteckt ist, der mit einem Wickelkern des Wickelfilterelements axial fest verbunden Ist und in den das Plattenfilterelement axial eingesetzt ist.

Aus der US 2007/0199285 A1 ist ein Wickelfilterelement bekannt, dessen Wickelkern zwei aus dem Wickelfilterelement axial vorstehende Griffelemente aufweist, an denen das Filterelement aus einem Gehäuse herausgezogen werden kann.

Aus der EP 1 844 840 A2 ist ein Filterelement bekannt, das einen zylinddrischen Filterkörper und zwei daran angeordnete axiale Endscheiben aufweist. Eine dieser Endscheiben ist mit einem Handgriff ausgestattet, mit dem das gesamte Filterelement manipulierbar ist.

Die vorliegende Erfindung beschäftigt sich mit dem Problem, für eine Filtereinrichtung der eingangs genannten Art bzw. für ein darin verwendetes Wickelfilterelement eine verbesserte Ausführungsform anzugeben, die sich Insbesondere durch eine hohe Formstabilität bei niedrigem Durchströmungswiderstand auszeichnet. Außerdem soll eine preiswerte Realisierbarkeit erreicht werden.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, zumindest im montierten Zustand des Wickelfilterelements den Wickelkern mit einer gehäusefesten Struktur axial fest zu verbinden. Derartige Wickelfilterelemente sind zur Reinigung von flüssigen oder gasförmigen Fluidströmen, vorzugsweise in Kraftfahrzeugen, geeignet. Beispielsweise können flüssige Kraftstoffe, wie Diesel oder Benzin, oder Öle von Verunreinigungen befreit werden. Gasförmige Fluidströme, welche mit dem erfindungsgemäßen Wickelfilterelement gereinigt werden können, sind z. B. die Frischluftzufuhr oder das Abgas einer Brennkraftmaschine. Außerdem kann die Luft für einen Fahrgastinnenraum mit dem erfindungsgemäßen Wickelfilterelement gereinigt werden. Es hat sich gezeigt, dass es zur Erzielung einer ausreichenden axialen Stabilität Innerhalb des Wickelfilterelements ausreicht, das Wickelfilterelement über zumindest eine Axialverbindung im Bereich seines Wickelkerns am Filtergehäuse direkt oder indirekt festzulegen. Hierdurch wird im Wickelfilterelement eine zentrale Abstützung bzw. Fixierung am Filtergehäuse bereitgestellt. In Verbindung mit einer üblicherweise ohnehin vorhandenen umfangsseitigen axialen Abstützung bzw. Festlegung zwischen dem Wickelfilterelement und dem Filtergehäuse kann die Scherbelastung der einzelnen gewickelten Lagen soweit reduziert werden, dass kritische Belastungen, die zu einer Beschädigung oder Zerstörung des Wickelfilterelements führen können, reduziert bzw. vermieden werden können. Besonders vorteilhaft bei dieser Lösung ist, dass sich dadurch im Wesentlichen keine Erhöhung des burchströmungswiderstands des Wickelfilterelements ergibt. Denn der dem Wickelkern zugeordnete zentrale Bereich des Wickelfilterelements ist ohnehin nicht durchströmbar, so dass die zumindest eine im Bereich des Wickelkerns vorgesehene Axialverbindung keinen oder nur einen vernachlässigbaren Einfluss auf die Durchströmung des Wickelfilterelements hat.

Die jeweilige Axialverbindung kann lösbar ausgestaltet sein, beispielsweise als Clipsverbindung oder als Schraubverbindung. Alternativ ist es ebenso möglich, die jeweilige Axialverbindung unlösbar auszugestalten, zum Beispiel als Schweißverbindung oder als Nietverbindung oder als Klebverbindung. Alternativ Ist es zur Realisierung einer unlösbaren Axialverbindung außerdem möglich, den Wickelkern und die gehäusefeste Struktur als einstückiges integralbauteil auszubilden. Der Wickelkern ist dann integral an der gehäusefesten Struktur ausgeformt bzw. ist umgekehrt die gehäusefeste Struktur integral am Wickelkern ausgeformt.

Bei der gehäusefesten Struktur handelt es sich erfindungsgemäß um eine Tauchrohrplatte, die wenigstens ein Tauchrohr eines Zyklonvorabscheiders aufweist. Somit ist die gehäusefeste Struktur ein bezüglich des Filtergehäuses separates Bauteil, das in das Filtergehäuse eingebaut ist.

Erfindungsgemäß ist die Filterelnrichtung als Luftfiltereinrichtung ausgeführt und mit einem Zyklonvorabschelder ausgestattet, der zumindest ein Zyklonelement mit einem Zyklongehäuse und einem darin eintauchenden Tauchrohr aufweist. In das Filtergehäuse ist dann die das jeweilige Tauchrohr aufweisende Tauchrohrplatte eingebaut, wobei die Tauchrohrplatte erfindungsgemäß die gehäusefeste Struktur bildet, mit welcher der Wickelkern axial fest verbunden ist. Die Tauchrohrplatte erhält dadurch eine Doppelfunktion, da sie einerseits zum Herstellen bzw. Ausbilden des jeweiligen Zyklonelements genutzt wird und da sie andererseits zur axialen Fixierung des Wickelkerns dient.

Zweckmäßig ist das Wickelfilterelement axial durchströmbar ausgestaltet, also parallel zur Wickelachse. Ferner kann zumindest eine Dichtung vorgesehen sein, die das Wickelfilterelement in Umfangsrichtung umschließt. Die jeweilige Dichtung wirkt dabei radial und bewirkt dadurch eine axiale Trennung zwischen einer Rohseite und einer Reinseite im Filtergehäuse.

Besonders vorteilhaft ist nun eine Weiterbildung, bei welcher ein Dichtungsträger vorgesehen ist, der in der Umfangsrichtung geschlossen ist, der das Filtermedium von außen in Umfangsrichtung umschließt, der radial außen die wenigstens eine Dichtung trägt und der axial in eine gehäusefeste Dichtungskontur eingesteckt ist. Die wenigstens eine Dichtung wirkt dann radial zwischen dem Dichtungsträger und der gehäusefesten Dichtungskontur, um die genannte radiale Dichtwirkung bzw. die genannte axiale Trennung zu realisieren. Über den Dichtungsträger kann gleichzeitig eine weitere axiale Fixierung zwischen Filtermedium und Filtergehäuse erzeugt werden, die am Wickelfilterelement umfangsseitig wirkt, während die wenigstens eine Axialverbindung über den Wickelkern zentral wirkt. In diesem Fall ist das Filtermedium am Dichtungsträger axial fixiert, und zwar zumindest In einer Richtung. Außerdem ist das Wickelfilterelement über den Dichtungsträger direkt oder Indirekt am Filtergehäuse axial abgestützt, und zwar ebenfalls zumindest in einer Richtung.

Von besonderem Vorteil ist nun eine Weiterbildung, bei welcher die gehäusefeste Dichtungskontur, in welche der Dichtungsträger eingesteckt ist, an einer Innenseite der zuvor genannten Tauchrohrplatte ausgebildet ist. Hierdurch ergibt sich ein besonders kompakter Aufbau, der mit einer weiteren Funktionalität für die Tauchrohrplatte einhergeht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine stark vereinfachte Schnittansicht einer Filtereinrichtung im Bereich von Axialverbindungen,
- Fig. 2: eine auseinandergezogene und teilweise geschnittene perspektivische Ansicht einer Luftfiltereinrichtung mit Axialverbindung,
- Fig. 3: eine perspektivische Ansicht der Luftfiltereinrichtung.

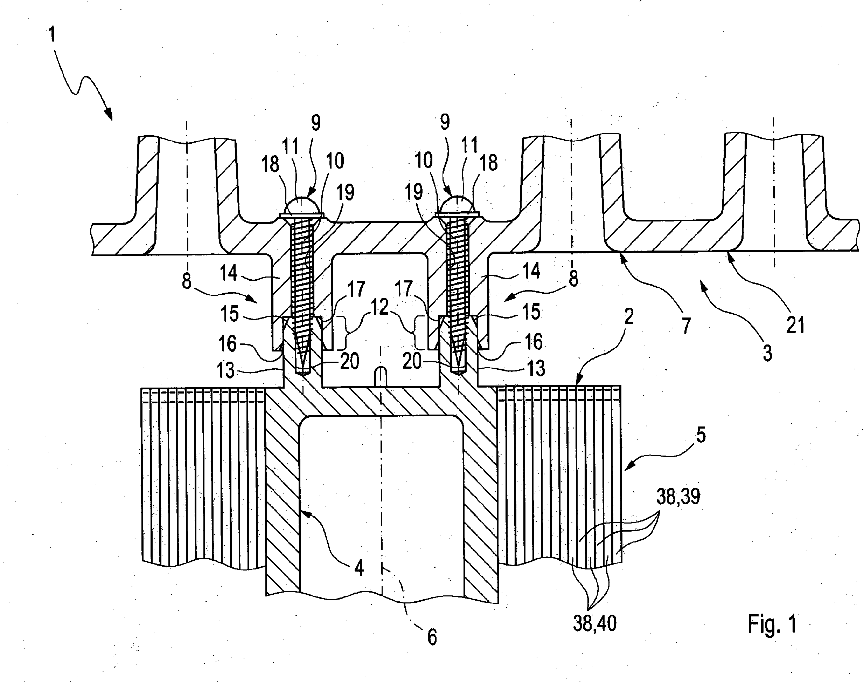

Entsprechend den Fig. 1-3 umfasst eine Luftfiltereinrichtung 1 ein Wickelfilterelement 2 und ein Filtergehäuse 3. Die Luftfiltereinrichtung 1 kann bevorzugt in einer Frischluftanlage einer Brennkraftmaschine zur Anwendung kommen, die beispielsweise in einem Kraftfahrzeug angeordnet sein kann.

Das Wickelfilterelement 2 weist einen Wickelkern 4 und ein Filtermedium 5 oder Filtermaterial 5 auf, das in einer Umfangsrichtung um den Wickelkern 4 gewickelt ist. Hierdurch wird eine Wickelachse 6 definiert, die gleichzeitig eine Längsachse oder Axialrichtung des Wickelfilterelements 2 festlegt. Das Filtergehäuse 3 dient zur Aufnahme des Wickeifilterelements 2. Das Filtermedium 5 besteht aus einem üblichen Filtermaterial, insbesondere Filterpapier oder Filtervlies. Es kann gewellt sein, so dass es sich dann um ein Wellfiltermaterial handelt.

Der Wickelkern 4 ist im hier gezeigten Beispiel durch einen flachen Rahmen gebildet, wodurch das gewickelte Filtermedium 5 eine ovale Form erhält. Alternativ ist auch ein zylindrischer Wickelkern 4 denkbar, der dann zu einem zylindrisch geformten Wickelfilterelement 2 führt. Ebenso kann der Wickelkern 4 eine rechteckige, insbesondere quadratische Struktur besitzen.

Der Wickelkern 4 ist in dem in Fig. 1 gezeigten Einbauzustand axial fest mit einer gehäusefesten Struktur 7 verbunden. Hierzu ist zumindest eine Axialverbindung 8 vorgesehen. Im Beispiel der Fig. 1 sind zwei derartige Axialverbindungen 8 dargestellt. Über diese beiden Axialverbindungen 8 ist der Wickelkern 4 mit der gehäusefesten Struktur 7 axial fest verbunden. Im gezeigten Beispiel sind die Axialverbindungen 8 lösbar ausgestaltet. Im Einzelnen sind sie dabei als Schraubverbindungen ausgestaltet, die jeweils eine Schraube 9 mit einem Schraubenschaft 10 und einem Schraubenkopf 11 umfassen. Alternativ kann eine andere lösbare Axialverbindung 8 zum Beispiel als Clipsverbindung ausgestaltet sein.

Alternativ zu einer lösbaren Axialverbindung 8 kann auch eine unlösbar ausgestaltete Axialverbindung vorgesehen sein. Eine derartige unlösbare Axialverbindung kann beispielsweise durch eine Schweißverbindung oder durch eine Nietverbindung oder durch eine Klebverbindung realisiert werden.

In jedem Fall ist durch die jeweilige Axialverbindung 8 der Wickelkern 4 axial fest mit der gehäusefesten Struktur 7 verbunden. Eine derartige Axialverbindung 8 charakterisiert sich durch die Möglichkeit, in Axialrichtung Zugkräfte zu übertragen. Ebenso können auch axiale Druckkräfte übertragen werden. Jedenfalls unterscheidet sich eine derartige Axialverbindung 8 von einer reinen axialen Abstützung, die keine axialen Zugkräfte, sondern nur axiale Druckkräfte übertragen kann.

Bei einer anderen Ausführungsform kann die jeweilige unlösbare Axialverbindung 8 auch dadurch realisiert werden, dass der Wickelkern 4 und die gehäusefeste Struktur 7 ein einstückiges Integralbauteil bilden. Bei einer derartigen Ausführungsform kann der Wickelkern 4 integral an der gehäusefesten Struktur 7 ausgeformt sein. Ebenso ist es umgekehrt möglich, dass die gehäusefeste Struktur 7 integral am Wickelkern 4 ausgeformt ist. Beispielsweise lassen sich Wickelkern 4 und gehäusefeste Struktur 7 jeweils als Kunststoff-Spritzgussteile konzipieren. Zweckmäßig können diese Einzelteile dann wie vorstehend vorgeschlagen baulich integriert werden, so dass letztlich nur ein einziges Kunststoff-Spritzgussteil hergestellt werden muss, das integral den Wickelkern 4 und die gehäusefeste Struktur 7 umfasst.

Bevorzugt weist die jeweilige Axialverbindung 8 einen Steckbereich 12 auf. Im jeweiligen Steckbereich 12 ist ein sich axial erstreckender Zapfen 13 in eine sich axial erstreckende Hülse 14 axial eingesteckt. Im gezeigten Beispiel steht der jeweilige Zapfen 13 vom Wickelkern 4 axial ab, während die jeweilige Hülse 14 axial von der gehäusefesten Struktur 7 absteht. Es ist klar, dass auch eine umgekehrte Positionierung mit von der Struktur 7 abstehendem Zapfen 13 und vom Wickelkern 4 abstehender Hülse 14 realisierbar ist.

Zweckmäßig ist der jeweilige Zapfen 13 integral am Wickelkern 4 ausgeformt. Auch die Hülsen 14 können integral an der gehäusefesten Struktur 7 ausgeformt sein. Im gezeigten Beispiel besitzt der jeweilige Zapfen 13 an seinem bezüglich des Wickelkerns 4 distalen Ende eine Einführfase 15, die das Einfädeln in die jeweilige Hülse 14 vereinfacht. Zusätzlich oder alternativ kann die jeweilige Hülse 14 an ihrem dem Zapfen 13 zugewandten Ende eine Einführfase 16 aufweisen, um das Einführen des Zapfens 13 in die Hülse 14 zu erleichtern. Im hier gezeigten Beispiel ist die jeweilige Hülse 14 außerdem mit einem Axialanschlag 17 ausgestattet, der durch eine Ringstufe realisiert ist. Der Axialanschlag 17 begrenzt die axiale Einstecktiefe des Zapfens 13 in die jeweilige Hülse 14.

Im gezeigten Beispiel ist die jeweilige Schraube 9 mit ihrem Schraubenkopf 11, insbesondere über eine Scheibe 18 an einer vom Zapfen 13 abgewandten Seite an der gehäusefesten Struktur 7 abgestützt. Der Schraubenschaft 10 durchsetzt eine in der jeweiligen Hülse 14 ausgebildete Durchgangsöffnung 19, deren Innendurchmesser größer ist als der Außendurchmesser des Schraubenschafts 10. Ferner ist die jeweilige Schraube 9 mit ihrem Schraubenschaft 10 in eine Schrauböffnung 20, die im jeweiligen Zapfen 13 ausgebildet ist, eingeschraubt. Dabei ist der Innenquerschnitt der jeweiligen Schrauböffnung 20 kleiner als der Außenquerschnitt des Schraubenschafts 10. Insbesondere schneidet sich die jeweilige Schraube 9 in den Zapfen 13 ein, so dass in der Schrauböffnung 20 auf die Anbringung eines Innengewindes verzichtet werden kann.

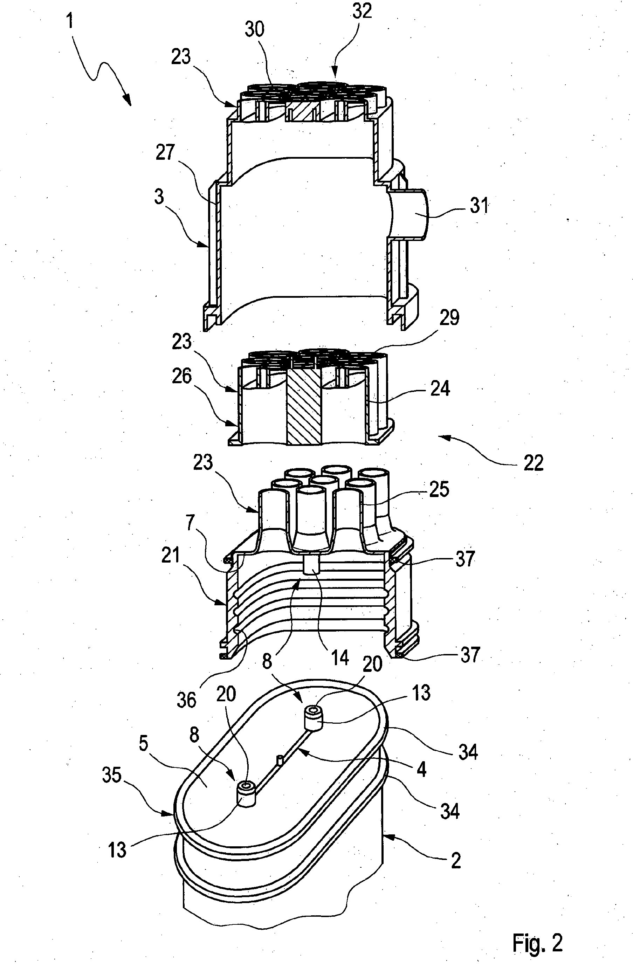

Bei der gehäusefesten Struktur 7 kann es sich grundsätzlich um einen Wandabschnitt des Filtergehäuses 3 handeln. Insbesondere handelt es sich dann um ein integral am Filtergehäuse 3 ausgeformtes Element. Bevorzugt wird jedoch die hier gezeigte Ausführungsform, bei welcher die gehäusefeste Struktur 7 bezüglich des Filtergehäuses 3 ein separates Bauteil ist, das an das Filtergehäuse 3 angebaut ist. Bevorzugt handelt es sich bei der gehäusefesten Struktur um eine Tauchrohrplatte 21, die im Folgenden mit Bezug auf Fig. 2 näher erläutert wird.

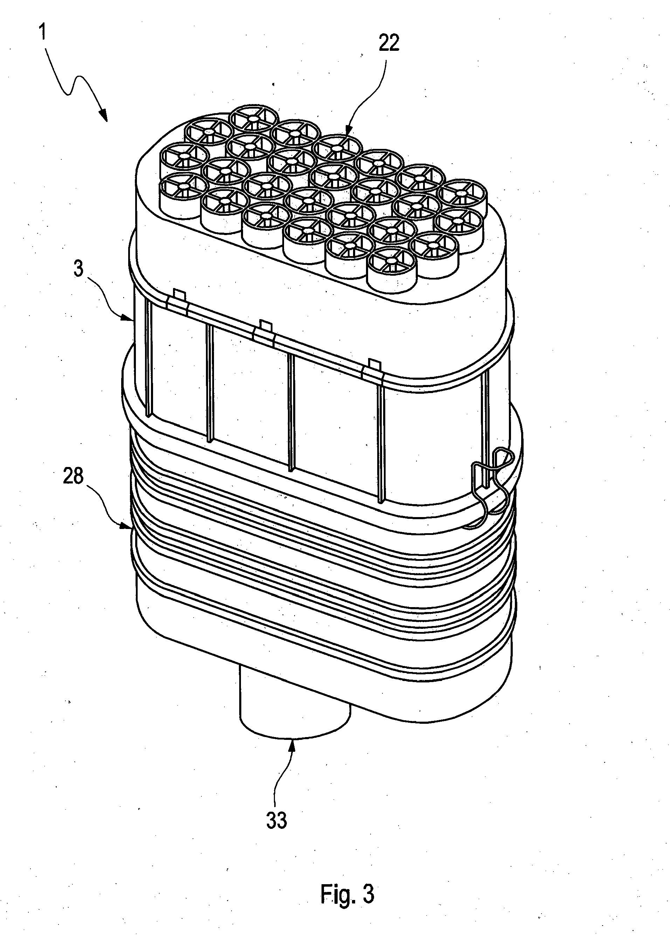

Entsprechend den Fig. 2 und 3 kann die Luftfiltereinrichtung 1 mit einem Zyklonvorabscheider 22 ausgestattet sein, der zumindest ein Zyklonelement 23 umfasst. Im gezeigten Beispiel umfasst der Zyklonvorabscheider 22 mehrere derartige Zyklonelemente 23, zum Beispiel mehr als zehn. Jedes Zyklonelement 23 weist ein Zyklongehäuse 24 und ein Tauchrohr 25 auf, das im montierten Zustand in das jeweilige Zyklongehäuse 24 eintaucht und dadurch im jeweiligen Zyklonelement 23 einen durchströmbaren Ringraum ausbildet. Die zuvor genannte Tauchrohrplatte 21 weist die Tauchrohre 25 der Zyklonelemente 23 auf. Die Tauchrohrplatte 21 ist in das Filtergehäuse 3 eingebaut. Wie vorstehend erläutert, bildet die Tauchrohrplatte 21 bei einer bevorzugten Ausführungsform die gehäusefeste Struktur 7, an welcher der Wickelkern 4 axial befestigt ist. Dementsprechend ist in der Schnittdarstellung der Fig. 2 eine der Hülsen 14 erkennbar, die an der Tauchrohrplatte 21 ausgebildet ist.

Der Zyklonvorabscheider 22 umfasst im gezeigten Beispiel außerdem eine Gehäuseplatte 26, welche die Zyklongehäuse 24 der einzelnen Zyklonelemente 23 aufweist und die in einen Einlassabschnitt 27 des Filtergehäuses 3 eingebaut ist. Der Einlassabschnitt 27 wird gemäß Fig. 3 im montierten Zustand mit einem Auslassabschnitt 28 des Filtergehäuses 3 verschlossen. Dabei wird die in die Gehäuseplatte 26 eingesteckte Tauchrohrplatte 21 zwischen den beiden Abschnitten 27, 28 des Filtergehäuses 3 festgelegt. An der Gehäuseplatte 26 ist außerdem an der Einlassseite des jeweiligen Zyklongehäuses 24 ein Drallerzeuger 29 ausgeformt. Außerdem ist im gezeigten Beispiel am Einlassabschnitt 27 des Filtergehäuses 3 für jedes Zyklonelement 23 ein Vordrallerzeuger 30 ausgeformt. Im montierten Zustand befinden sich die Vordrallerzeuger 30 jeweils axial unmittelbar vor einem Drallerzeuger 29 der Gehäuseplatte 26. Die Tauchrohre 25 erstrecken sich in den Zyklongehäusen 24 bis zu den Drallerzeugern 29.

Der Zyklonvorabscheider 22 umfasst außerdem eine Auslassöffnung 31 für abgeschiedene Verunreinigungen, insbesondere für flüssige Verunreinigungen. Die Auslassöffnung 31 ist im Beispiel in Form eines Stutzens am Einlassabschnitt 27 des Filtergehäuses 3 integral ausgeformt. Die Vordrallerzeuger 30 bilden gleichzeitig einen Einlass 32 des Filtergehäuses 3 für zu reinigende Luft. Ein Auslass 33 des Filtergehäuses 3 ist am Auslassabschnitt 28 ausgeformt. Durch ihn kann die gereinigte Luft aus dem Filtergehäuse 3 austreten.

Das Wickelfilterelement 2 ist von der zu reinigenden Luftströmung axial, also parallel zur Wickelachse 6 durchströmbar. Um das Wickelfilterelement 2 im Gehäuse 3 abgedichtet unterbringen zu können, ist zumindest eine Dichtung 34 vorgesehen, die das Wickelfilterelement 2 in der Umfangsrichtung umschließt. Im Beispiel sind zwei derartige, ringförmig geschlossene Dichtungen 34 angedeutet. Im eingebauten Zustand trennen die Dichtungen 34 im Filtergehäuse 3 parallel zum Wickelfilterelement 2 in axialer Richtung eine Rohseite von einer Reinseite. Die Dichtungen 34 wirkeri zweckmäßig radial. Sie können beispielsweise als O-Ringe ausgestaltet sein.

Im Beispiel ist ein Dichtungsträger 35 vorgesehen. Dieser ist in der Umfangsrichtung geschlossen ausgestaltet. Er ist am Wickelfilterelement 2 so angebracht, dass er das Filtermedium 5 in einem Axialabschnitt des Wickelfilterelements 2 in Umfangsrichtung von außen umschließt. Im Beispiel ist der Dichtungsträger 35 an einem, vorzugsweise am anströmseitigen Axialende des Wickelfilterelements 2 angeordnet. Hierdurch stabilisiert der Dichtungsträger 35 das Wickelfilterelement 2. Der Dichtungsträger 35 trägt die wenigstens eine Dichtung 34 an seiner Außenseite. Im montierten Zustand ist der Dichtungsträger 35 axial in eine Dichtungskontur 36 eingesteckt, die gehäusefest angeordnet ist. Im gezeigten Beispiel ist diese gehäusefeste Dichtungskontur 36 an einer Innenseite der Tauchrohrplatte 21 ausgeformt. Insoweit ist die Tauchrohrplatte 21 multifunktional konzipiert. Einerseits trägt sie die Tauchrohre 25 zum Zusammenbau der einzelnen Zyklonelemente 23. Andererseits dient sie zur Bereitstellung der gehäusefesten Struktur 7, wozu Komponenten der Axialverbindung 8, hier die Hülsen 14 an der Tauchrohrplatte 21 angebracht sein können. Ferner ist die gehäusefeste Dichtungskontur 36 zur Abdichtung des Wickelfilterelements 2 im Filtergehäuse 3 an besagter Tauchrohrplatte 21 ausgeformt. Die Tauchrohrplatte 21 trägt im Beispiel selbst weitere Dichtungen 37, die an der Innenseite des Einlassabschnitts 27 des Filtergehäuses 3 dichtend zur Anlage kommen. Diese Dichtungen 37 sind im Beispiel angespritzte Lippendichtungen aus Kunststoff.

Das Filtermaterial 5 ist zweckmäßig als Wellfiltermaterial ausgestaltet, so dass es im gewickelten Zustand eine Vielzahl axial, also parallel zur Wickelachse 6 orientierter Kanäle 38 bildet. Diese Kanäle 38 sind wechselweise einlassseitig und auslassseitig verschlossen. Auf diese Weise werden auslassseitig verschlossene Einlasskanäle 39 und einlassseitig verschlossene Auslasskanäle 40 gebildet. Einlasskanäle 39 und Auslasskanäle 40 sind dabei benachbart zueinander angeordnet und dabei durch das Filtermaterial 5 voneinander getrennt. Die zu reinigende Luft strömt dementsprechend durch die Einlasskanäle 39 in das Wickelfilterelement 2 ein, strömt durch das Filtermaterial 5 und gelangt so in die Auslasskanäle 40, über die es aus dem Wickelfilterelement 2 wieder ausströmen kann. Das Filtermaterial 5 ist dabei in üblicherweise für die herauszufilternden Verunreinigungen undurchlässig ausgestattet, so dass diese einlassseitig oder rohseitig im Filtermaterial 5 bzw. im Wickelfilterelement 2 zurückbleiben. Das Verschließen der einzelnen Kanäle 38 an ihrem einlassseitigen Ende bzw. an ihrem auslassseitigen Ende kann beispielsweise mittels entsprechender Klebeverbindungen realisiert werden, die gleichzeitig zur Stabilisierung des gewickelten Filtermaterials 5 und somit zur Aussteifung des Wickelfilterelements 2 dienen.

## Patentansprüche

1. Luftfiltereinrichtung, insbesondere für eine Frischluftanlage einer Brennkraftmaschine, vorzugsweise In einem Kraftfahrzeug,
- mit einem Wickelfilterelement (2), das einen Wickelkern (4) und ein in Umfangsrichtung um den Wickelkern (4) gewickeltes Filtermedium (5) aufweist,
- mit einem Filtergehäuse (3) zur Aufnahme des Wickelfilterelements (2),
- mit einem Zyklonvorabscheider (22), der zumindest ein Zyklonelement (23) mit einem Zyklongehäuse (24) und einem darin eintauchenden Tauchrohr (25) aufweist,
- wobei in das Filtergehäuse (3) eine das jeweilige Tauchrohr (25) aufweisende Tauchrohrplatte (21) eingebaut Ist,
**dadurch gekennzeichnet,**
- **dass** der Wickelkern (4) mittels wenigstens einer Axialverbindung (8) mit einer gehäusefesten Struktur (7) axial fest verbunden ist,
- **dass** die Tauchrohrplatte (21) die gehäusefeste Struktur (7) bildet, mit welcher der Wickelkern (4) axiale fest verbunden Ist.

2. Filtereinrichtung nach Anspruch 1,
**dadurch gekennzeichnet,**
**dass** die jeweilige Axialverbindung (8) lösbar ausgestaltet ist.

3. Filtereinrichtung nach Anspruch 2,
**dadurch gekennzeichnet,**
**dass** die jeweilige lösbare Axialverbindung (8) als Clipsverbindung oder als Schraubverbindung ausgestaltet ist.

4. Filtereinrichtung nach Anspruch 1,
**dadurch gekennzeichnet,**
**dass** die jeweilige Axialverbindung (8) unlösbar ausgestaltet ist.

5. Filtereinrichtung nach Anspruch 4,
**dadurch gekennzeichnet,**
**dass** die jeweilige unlösbare Axialverbindung (8) als Schweißverbindung oder als Nietverbindung oder als Klebverbindung ausgestaltet ist.

6. Filtereinrichtung nach Anspruch 1 oder 4,
**dadurch gekennzeichnet,**
**dass** der Wickelkern (4) und die gehäusefeste Struktur (7) ein einstückiges Integralbauteil bilden.

7. Filtereinrichtung nach einem der Ansprüche 1 bis 5,
**dadurch gekennzeichnet,**
**dass** die jeweilige Axialverbindung (8) einen Steckbereich (12) aufweist, In dem ein axial abstehender Zapfen (13) In eine axial orientierte Hülse (14) eingesteckt ist.

8. Filtereinrichtung nach Anspruch 7,
**dadurch gekennzeichnet,**
- **dass** der jeweilige Zapfen (13) eine Einführfase (15) aufweist, und/oder
- **dass** die jeweilige Hülse (14) eine Einführfase (16) aufweist, und/oder
- **dass** die jeweilige Hülse (14) einen die Einstecktiefe des Zapfens (13) begrenzenden Axialanschlag (17) aufweist.

9. Filtereinrichtung nach Anspruch 7 oder 8,
**dadurch gekennzeichnet,**
**dass** die jeweilige Axialverbindung (8) als Schraubverbindung ausgestaltet ist und eine Schraube (9) aufweist, die mit ihrem Schraubenkopf (11) an einer vom Zapfen (13) abgewandten Seite abgestützt ist und mit ihrem Schraubenschaft (10) eine In der Hülse (14) ausgebildete Durchgangsöffnung (19) durchsetzt und In eine im Zapfen (13) ausgebildete Schrauböffnung (20) eingeschraubt ist.

10. Filtereinrichtung nach einem der Ansprüche 1 bis 9,
**dadurch gekennzeichnet,**
**dass** das jeweilige Zyklongehäuse (24) an einer Gehäuseplatte (26) ausgebildet ist, die in einen Einlassabschnitt (27) des Filtergehäuses (3) eingebaut Ist.

11. Filtereinrichtung nach einem der Ansprüche 1 bis 10,
**dadurch gekennzeichnet,**
- **dass** das Wickelfilterelement (2) von einer zu reinigenden Fluidströmung axial durchströmbar ist,
- **dass** zumindest eine Dichtung (34) vorgesehen ist, die das Wickelfilterelement (2) In Umfangsrichtung umschließt.

12. Filtereinrichtung nach Anspruch 11,
**dadurch gekennzeichnet,**
**dass** ein Dichtungsträger (35) vorgesehen Ist, der In Umfangsrichtung geschlossen ist, der das Filtermedium (5) von außen in Umfangsrichtung umschließt, der radial außen die wenigstens eine Dichtung (34) trägt und der axial in eine gehäusefeste Dichtungskontur (36) eingesteckt ist.

13. Filtereinrichtung nach Anspruch 12,
**dadurch gekennzeichnet,**
**dass** die gehäusefeste Dichtungskontur (36) an einer Innenseite der Tauchrohrplatte (21) ausgebildet ist.

14. Filtereinrichtung nach einem der Ansprüche 1 bis 13,
**dadurch gekennzeichnet,**
**dass** das gewickelte Filtermedium (5) eine Vielzahl axial orientierter Kanäle (38) bildet, die wechselweise einlassseitig und auslassseitig verschlossen sind, so dass auslassseitig verschlossene Einlasskanäle (39) und einlassseitig verschlossene Auslasskanäle (40) benachbart sind und durch das Filtermedium (5) voneinander getrennt sind.

15. Verwendung eines Wickelfilterelements (2) in einer Luftfiltereinrichtung (1) nach einem der Ansprüche 1 bis 14, wobei Mittel (13, 15, 20) zum Herstellen einer Axialverbindung (8) zwischen der Tauchrohrplatte (21) und dem Wickelkern (4) vorgesehen sind.

## Claims

1. Air filter facility, in particular for an air supply system in an internal combustion engine, preferably in a motor car,
- with a wound filter element (2), which shows a winding core (4) and a filter element (5) wound around the winding core (4) in a peripheral direction,
- with a filter housing (3) for accepting the wound filter element (2),
- with a cyclonic pre-separator (22) which shows at least one cyclone element (23) with a cyclone housing (24) and an immersion tube (25) which dips into this,
- wherein an immersion pipe plate (21) is built into the filter housing (3) which shows the immersion pipe (25) in each case, **characterised in that**,
- the winding core (4) is connected axially fixed in place by means of at least one axial connection (8) with a fixed housing structure (7),
- the immersion pipe plate (21) forms the housing structure (7), with which the winding core (4) is connected axially fixed.

2. Filter facility according to Claim 1, **characterised in that**, the respective axial connection (8) is formed so it can be detached.

3. Filter facility according to Claim 2, **characterised in that**, the respective axial connection (8) which can be detached is formed as a clip connection or as a screw connection.

4. Filter facility according to Claim 1, **characterised in that**, the respective axial connection (8) is formed so that it cannot be detached.

5. Filter facility according to Claim 4, **characterised in that**, the respective axial connection (8) which cannot be detached is formed as a welded joint or as a riveted joint or an adhesive joint.

6. Filter facility according to Claim 1 or Claim 4, **characterised in that**, the winding core (4) and the fixed housing structure (7) form a one-piece integral structural element.

7. Filter facility according to one of the Claims 1 to 5, **characterised in that**, the respective axial connection (8) shows a mating area (12), in which an axially protruding pin (13) is slotted into an axially directed sleeve (14).

8. Filter facility according to Claim 7, **characterised in that**,
- the respective pin (13) has an insertion chamfer (15), and/or
- the respective sleeve (14) has an insertion chamfer (16), and/or
- the respective sleeve (14) has an insertion depth of pin (13) bordering on the axial end stop (17).

9. Filter facility according to Claim 7 or Claim 8, **characterised in that**, the respective axial connection (8) is designed as a screw connection and shows a screw (9) which is supported at the head of the screw (11) on a side turned away from the pin (13), and that it penetrates one of the transitional openings (19) formed in the sleeve (14) with the shaft of the screw (10) and is screwed into one of the screw openings (20) formed in the pin (13).

10. Filter facility according to one of the Claims 1 to 9, **characterised in that**, the respective cyclone housing (24) is formed on a housing plate (26), which is built into an inlet section (27) of the filter housing (3).

11. Filter facility according to one of the Claims 1 to 10, **characterised in that**,
- the winding filter element (2) can have a stream of fluid running through it for cleaning it in an axial direction,
- at least one gasket seal (34) is provided, enclosing the winding filter element (2) in a peripheral direction.

12. Filter facility according to Claim 11, **characterised in that**, a seal mount (35) is provided, which is closed in a peripheral direction, which envelops the filter medium (5) from the outside in the peripheral direction, which radially carries at least one seal (34) on the outside and which is axially inserted into a fixed housing seal contour (36).

13. Filter facility according to Claim 12, **characterised in that**, the fixed housing seal contour (36) is formed on an inner side of the immersion pipe plate (21).

14. Filter facility according to one of the Claims 1 to 13, **characterised in that**, the wound filter medium (5) forms a number of axially directed ducts (38), which are closed off alternatingly on the inlet side and the outlet side, so that on the outlet side closed off inlet ducts (39) and on the inlet side closed off outlet ducts (40) are situated close to one another and are separated from one another by the filter medium (5).

15. Use of a wound filter element (2) in an air filter facility (1) according to one of the claims 1 to 14, wherein means (13, 15, 20) for producing an axial connection (8) between the immersion pipe plate (21) and the winding core (4) are provided.

## Revendications

1. Dispositif de filtration d'air, en particulier pour un système d'arrivée d'air frais d'un moteur à combustion interne, de préférence dans un véhicule automobile,
- comprenant un élément filtre enroulé (2), qui comporte un noyau d'enroulement (4) et un milieu filtrant (5) enroulé dans la direction périphérique autour du noyau d'enroulement (4) ;
- comprenant un boîtier de filtre (3) destiné à loger l'élément filtre enroulé (2),
- comprenant un pré-séparateur cyclone (22), qui comprend au moins un élément cyclone (23) pourvu d'un boîtier de cyclone (24) et d'un tube plongeur (25) s'enfonçant dans ce dernier,
- dans lequel une plaque de tube plongeur (21) comportant le tube plongeur (25) respectif est montée dans le boîtier de filtre (3),
**caractérisé**
- **en ce que** le noyau enroulé (4) est assemblé solidement axialement à une structure (7) fixée au boîtier au moyen d'au moins une liaison axiale (8),
- **en ce que** la plaque de tube plongeur (21) forme la structure (7) fixée au boîtier à laquelle le noyau d'enroulement (4) est assemblé solidement axialement.

2. Dispositif de filtration, selon la revendication 1
**caractérisé**
**en ce que** la liaison axiale (8) respective est conçue de manière détachable.

3. Dispositif de filtration selon la revendication 2, **caractérisé**
**en ce que** la liaison axiale (8) détachable respective est réalisée sous la forme d'une liaison clipsée ou sous la forme d'une liaison vissée.

4. Dispositif de filtration selon la revendication 1,
**caractérisé**
**en ce que** la liaison axiale (8) respective est réalisée de manière indétachable.

5. Dispositif de filtration selon la revendication 4,
**caractérisé**
**en ce que** la liaison axiale (8) indétachable respective est réalisée sous la forme d'une liaison soudée ou d'une liaison rivetée ou d'une liaison collée.

6. Dispositif de filtration selon la revendication 1 ou 4,
**caractérisé**
**en ce que** le noyau d'enroulement (4) et la structure (7) fixée au boîtier forment un composant intégral d'une seule pièce.

7. Dispositif de filtration selon l'une des revendications 1 à 5,
**caractérisé**
**en ce que** la liaison axiale (8) respective comprend une zone d'emboîtement (12) dans laquelle un tourillon (13) axialement en saillie est emboîté dans un manchon (14) orienté axialement.

8. Dispositif de filtration selon la revendication 7,
**caractérisé**
- **en ce que** le tourillon (13) respectif comprend un chanfrein d'introduction (15), et/ou
- **en ce que** le manchon (14) respectif comprend un chanfrein d'introduction (16), et/ou
- **en ce que** le manchon (14) respectif comprend une butée axiale (17) limitant la profondeur d'emboîtement du tourillon (13).

9. Dispositif de filtration selon la revendication 7 ou 8,
**caractérisé**
**en ce que** la liaison axiale (8) respective est réalisée sous la forme d'une liaison vissée et comprend une vis (9), qui est en appui par sa tête de vis (11) sur une face opposée au tourillon (13) et qui, au moyen de sa tige de vis (10), traverse une ouverture de passage (19) formée dans le manchon (14) et est vissée dans une ouverture de vissage (20) formée dans le tourillon (13).

10. Dispositif de filtration selon l'une des revendications 1 à 9,
**caractérisé**
**en ce que** le boîtier de cyclone (24) respectif est formé sur une plaque de boîtier (26) qui est montée dans une section d'entrée (27) du boîtier de filtre (3).

11. Dispositif de filtration selon l'une des revendications 1 à 10,
**caractérisé**
- **en ce que** l'élément filtre enroulé (2) peut être traversé axialement par un courant de fluide à nettoyer
- **en ce qu'**au moins un joint (34) est prévu, qui entoure l'élément filtre enroulé (2) dans la direction périphérique.

12. Dispositif de filtration selon la revendication 11,
**caractérisé**
**en ce qu'**un porte-joint (35) est prévu, qui est fermé dans la direction périphérique, qui entoure le milieu filtrant (5) de l'extérieur dans la direction périphérique, qui porte radialement à l'extérieur le ou les joints (34) et qui est emboîté axialement dans un contour d'étanchéité (36) fixé au boîtier.

13. Dispositif de filtration selon la revendication 12,
**caractérisé**
**en ce que** le contour d'étanchéité (36) fixé au boîtier est formé sur une face intérieure de la plaque de tube plongeur (21).

14. Dispositif de filtration selon l'une des revendications 1 à 13,
**caractérisé**
**en ce que** le milieu filtrant (5) enroulé forme une pluralité de canaux (38) orientés axialement, qui sont fermés alternativement côté entrée et côté sortie, de sorte que les canaux d'entrée (39) fermés côté sortie et les canaux de sortie (40) fermés côté entrée sont voisins et séparés l'un de l'autre par le milieu filtrant (5).

15. Utilisation d'un élément filtre enroulé (2) dans un dispositif de filtration d'air (1) selon l'une des revendications 1 à 14, dans laquelle des moyens (13, 15, 20) permettant d'établir une liaison axiale (8) entre la plaque de tube plongeur (21) et le noyau d'enroulement (4) sont prévus.
